# EUROPÄISCHE PATENTSCHRIFT

(11) **EP 4 264 084 B1**
(45) Veröffentlichungstag und Bekanntmachung des Hinweises auf die Patenterteilung: **08.01.2025**
(21) Anmeldenummer: 21819343.1
(22) Anmeldetag: 25.11.2021
(51) Int. Cl.: F16G 1/28, F16G 1/10

(54) **HOCHLEISTUNGSZAHNRIEMEN AUS EPDM**
HEAVY-DUTY TOOTHED BELT MADE OF EPDM
COURROIE DENTÉE ROBUSTE CONSTITUÉE D'EPDM

(30) Priorität: 18.12.2020 DE 102020216256
(43) Veröffentlichungstag der Anmeldung: 25.10.2023
(73) Patentinhaber: ContiTech Deutschland GmbH, 30175 Hannover (DE)
(72) Erfinder: TEVES, Reinhard, 30165 Hannover (DE); SATTLER, Heiko, 30165 Hannover (DE); MICHALK, Jan, 30165 Hannover (DE); DIKMANS, Antonius, 30165 Hannover (DE); KANZOW, Henning, 30165 Hannover (DE); KAUTZ, Stephanie, 30165 Hannover (DE)
(74) Vertreter: Continental Corporation
(86) Internationale Anmeldenummer: PCT/DE2021/200203
(87) Internationale Veröffentlichungsnummer: WO 2022/128009

(56) Entgegenhaltungen:
- EP-B1- 1 677 030
- DE-A1- 102016 206 029
- DE-A1- 102019 205 005
- US-A1- 2017 299 017

## Beschreibung

Die vorliegende Erfindung betrifft Elastomerzahnriemen mit einem die Zähne des Zahnriemens überspannendem Gewebe, wobei eine die Zähne bildende Elastomermischung einen vernetzten Ethylen-Propylen-Kautschuk (EPM) und/oder einen vernetzten Ethylen-Propylen-Terpolymerkautschuk (EPDM) enthält, der mindestens 70% Gew.-%, bezogen auf den Polymeranteil der Elastomermischung, ausmacht, und wobei zwischen dem Gewebe und der die Zähne bildenden Elastomermischung eine Zwischenschicht angeordnet ist, die, bezogen auf den Polymeranteil der Zwischenschicht, mindestens 70 Gew.-% hydrierten Acrylnitril-Butadienkautschuk (HNBR) enthält. Die vorliegende Erfindung betrifft weiterhin Verfahren zur Herstellung solcher Elastomerzahnriemen und die Verwendung einer Schicht aus hydriertem Acrylnitril-Butadienkautschuk (HNBR) in solchen Zahnriemen zur Erhöhung der Lebensdauer, Verbesserung der Tieftemperaturstabilität und Verbesserung der Haftung zwischen Zähnen und Gewebe.

### Stand der Technik

Zahnriemen werden konventionell aus Elastomermischungen auf der Basis von Chloropren (CH₂=C(Cl)-CH=CH₂) gefertigt. Alternativ sind höherwertige Zahnriemen erhältlich, die schwefelvernetztes HNBR (= hydridrierte Acrylnitril/Butadien-Kautschuk) als Basispolymer enthalten. Für besonders gute Wärmealterungsbeständigkeiten ist zudem der Einsatz von peroxidisch vernetztem HNBR bekannt. Dabei kann die Festigkeit der HNBR-Elastomere noch verbessert werden, indem für die peroxidische Vernetzung Zinksalze von Säuren mit radikalisch polymerisierbaren Gruppen, wie insbesondere Acryl- oder Methacrylsäure, aber auch Sorbinsäure zugesetzt werden.

Zur Verstärkung enthalten konventionelle Zahnriemen auf der Zahnseite, und meist auch auf der der Zahnseite entgegengesetzten Seite eine Gewebeschicht, die die Zähne oder das Band des Riemens abdeckt und über das ein Zahnscheibe zwischen die Zähne des Riemens eingreift. Um ein solches Gewebe fest auf dem Zähnen des Zahnriemens zu befestigen wird das Gewebe in der Regel zunächst mit einem Gemisch aus Resorcin/Formaldehyd und einem Latex beschichtet (auch als RFL-Schicht bezeichnet). Anschließend wird als Haftmischung eine Elastomermischung aufgebracht, die regelmäßig aus dem gleichen Elastomer gebildet ist wie die Zähne des Zahnriemens, um eine gute Verbindung des beschichteten Gewebes mit dem Elastomer der Zähne zu gewährleiten. D.h. bei aus Chloropren-gebildeten Zähnen des Zahnriemens wird eine Chloroprenbeschichtung auf das Gewebe aufgebracht und bei aus HNBRgebildeten Zähnen des Zahnriemens wird eine Beschichtung aus HNBR auf das Gewebe aufgebracht.

Das Aufbringen der Haftmischung erfolgt traditionsgemäß, indem das nicht vernetzte Elastomer in einem geeigneten organischen Lösungsmittel (z.B. Toluol, Xylol oder einem Carbonsäureester) gelöst und in einer Menge auf das mit RFL-behandelte Gewebe aufgebracht wird, dass sich nach Entfernen des Lösungsmittels eine Haftschicht mit einer Dicke im Bereich von etwa 10 µm bildet. Alternativ ist es möglich, eine dünne Schicht des Elastomers durch kalandrieren auf das RFL-behandelte Gewebe aufzubringen.

Problematisch an konventionellen Hochleistungszahnriemen aus Chloroprenkautschuk ist allerdings dessen Chlorgehalt, da z.B. bei der Verbrennung von Chloroprenartikeln nach ihrer Gebrauchsdauer Chlorwasserstoff freigesetzt wird, der aufwendig aus den Verbrennungsabgasen herausgefiltert werden muss. Es besteht daher ein Bedarf nach einem Alternativmaterial für Chloroprenkautschuk, das möglichst vergleichbare Gebrauchseigenschaften vermittelt, aber frei von Chlor oder anderen Halogenen ist.

HNBR erfüllt die Anforderung eines möglichst geringen Chlorgehalts, ist aber andererseits mit den Nachteilen eines verhältnismäßig hohen Preises und einer im Bereich tieferer Temperaturen vergleichsweise niedrigen Flexibilität verbunden.

Ein Elastomermaterial, das die Anforderung von vergleichbaren Gebrauchseigenschaften besser erfüllen könnte, sind Ethylen-Propylen Elastomere wir beispielsweise Ethylen-Propylen-Dien Elastomere (EPDM). Z.B. beschreibt die DE 10 2008 055 530 Zahnriemen für Nockenwellenantriebe in Verbrennungsmotoren, in denen das Elastomer des Zahnriemenkörpers aus einer EPDM-Mischung besteht, die zusätzlich spezielle Kurzfasern mit einer Länge im Bereich von 2 bis 5 mm enthält. Durch die in DE 10 2008 055 530 beschriebenen Mischungen soll ein zumindest weitgehender Verzicht auf NBR und HNBR möglich sein, und eine verbesserte Tieftemperaturflexibiltät und höhere Lebensdauer bei gleicher oder besserer Kraftübertragung erreicht werden.

Allerdings wurde bei Zahnriemen aus EPDM, bei denen zwischen dem Gewebe und dem EPDM des Zahnriemens eine Schicht aus EPDM angeordnet war, festgestellt, dass keine ausreichende Anbindung des Gewebes an das EPDM Material erreicht werden konnte, so dass diese Zahnriemen nur eine unzureichende Haltbarkeit aufweisen. Auch durch eine direkte Anbindung eines Gewebes mit einer konventionellen RFL-Beschichtung an die Zähne eines Zahnriemens aus EPDM ließ sich keine ausreichende Lebensdauer des Zahnriemens realisieren.

In der EP 1 677 030 B1 wird ein Zahnriemen mit einem Körper aus EPDM und einem darauf befestigten Gewebe beschrieben, in dem das Gewebe mit einem Resorcin-Formaldehyd-Latex mit einem carboxylierten hydrierten Nitrilkautschuk als Latex getränkt und beschichtet wurde. Durch diese Beschichtung soll eine verbesserte Anhaftung des Gewebes an den EPDM-Körper des Zahnriemens (im Vergleich zu einem Zahnriemen ohne RFL-Beschichtung) erreicht werden. Allerdings zeigt eine solche Anbindung keine signifikant verbesserte Haltbarkeit, was durch die stark unterschiedlichen Polaritäten des Resorcin-Formaldehyd-Harzes und des carboxylierten hydrierten Nitrilkautschuk einerseits und des unpolare EPDM-Elastomers andererseits oder den verhältnismäßig großen Steifigkeitsunterschied der beiden Materialien bedingt sein könnte.

Vor diesem Hintergrund besteht ein Bedarf nach Verfahren und Mitteln, mit denen ein kostengünstiger und möglichst halogenfreier Zahnriemen mit hoher Lebensdauer realisiert werden kann. Ebenso besteht ein Bedarf für Verfahren und Mittel, mit denen eine feste Anbindung eines Gewebes an ein EPDM-Elastomer in einem Zahnriemen realisiert werden kann. Die vorliegende Erfindung befasst sich mit diesem Bedarf.

### Detaillierte Beschreibung

Im Rahmen der dieser Erfindung zugrundeliegenden Untersuchungen wurde überraschend gefunden, dass sich eine gute Lebensdauer und Anbindung von Zahnriemenkörper und Gewebe mit einem Zahnriemen gemäß den Vorgaben aus Anspruch 1 realisieren lässt. Bevorzugte Ausgestaltungen solcher Zahnriemen sind in den abhängigen Ansprüchen 2 bis 11 angegeben.

Demzufolge betrifft die vorliegende Erfindung in einem ersten Aspekt Elastomerzahnriemen mit einem Körper, der ein Länge, in seitlichem Abstand angeordnete Seiten und eine Innen und eine Außenseite besitzt und eine Vielzahl von in einer Längsrichtung im Abstand auf der Innenseite oder der Außenseite des Körpers angeordnete Zähne festlegt, und einem Gewebe, das die Zähne überspannt, wobei die Elastomermischung, aus der die Zähne gebildet sind, einen vernetzten Ethylen-Propylen-Kautschuk (EPM) und/oder einen vernetzten Ethylen-Propylen-Terpolymerkautschuk (EPDM) enthält, der mindestens 70% Gew.-%, bezogen auf den Polymeranteil der die Zähne bildenden Elastomermischung, ausmacht, und wobei zwischen dem Gewebe und dem die Zähne bildenden Elastomer eine Zwischenschicht angeordnet ist, die, bezogen auf den Polymeranteil der Zwischenschicht, mindestens 70 Gew.-% hydrierten Acrylnitril-Butadienkautschuk (HNBR) enthält.

Für die verbesserte Anbindung des Gewebes an die Zahnriemenkörper ist es entsprechend maßgeblich, dass der Wesentliche Anteil des Elastomers im Kontaktbereich des Zahnriemenkörpers und der Zwischenschicht aus EPDM bzw. HNBR besteht. Höherer Anteile an anderen Elastomeren können diese Anbindung beeinträchtigen, so dass deren Anteil im Allgemeinen geringgehalten werden sollte, aber sich nicht unbedingt störend auswirken muss.

Sofern im Weiteren nicht anders angegeben beziehen sich alle Mengenangaben auf den Polymeranteil in der jeweiligen Zusammensetzung was zur Folge hat, dass die Gesamtsumme dieser Mengenangaben auch mehr als 100% betragen kann.

EPM oder EPDM bildet im Kontext der hier beschrieben Erfindung das hauptsächliche Elastomermaterial mindestens der Zähne des Zahnriemens, wobei es insbesondere bevorzugt ist, wenn die Zähne den vernetzten Ethylen-Propylen-Kautschuk (EPM) und/oder den vernetzten Ethylen-Propylen-Terpolymerkautschuk (EPDM) in einem Anteil von mindestens 80 Gew.-%, bevorzugt mindestens 90 Gew.-% und ganz besonders bevorzugt mindestens 95 Gew.-%, und noch weiter bevorzugt mindestens 98 Gew.-% bezogen auf den Polymeranteil der die Zähne bildenden Elastomermischung, enthalten. Alternativ oder zusätzlich ist es bevorzugt, wenn diese Elastomere das hauptsächliche Elastomermaterial der gesamten Kontaktfläche zwischen Gewebe und Zahnriemen bilden (d.h. Zähne und Stege). Weiterhin ist es bevorzugt, wenn der gesamte Körper des Zahnriemens hautsächlich (d.h. zu mindestens 70 Gew.-%) auf EPM und/oder EPDM als Elastomer gebildet ist, da dies die Herstellung des Zahnriemenkörpers vereinfacht. Mit "gesamtem Körper" ist hier der Zahnriemenkörper ohne gegebenenfalls vorhandene Verstärkungselemente wie z.B. Zugstränge bezeichnet.

In einer Alternative kann 100 % des Elastomers in der Elastomermischung durch EPM oder EPDM bereitgestellt werden. Gemäß einer weiteren Alternative kann der zu 100% des Elastomers fehlende Anteil durch ein anderes Elastomer gebildet sein, wobei das andere Elastomer bevorzugt durch eines oder mehrere von Silikonkautschuk, Polychloropren, Epichlorhydrin, hydrierter Nitrilbutadienkautschuk, Naturkautschuk, EthylenVinylacetat-Copolymer, Ethylenmethacrylat-Copolymere und -Terpolymere, Styrol-Butadien-Kautschuk, Nitrilkautschuk, chloriertes Polyethylen, chlorsulfoniertes Polyethylen, alkyliertes Polyethylenpolyulfon, Butadienkautschuk und Gemische davon gebildet sein kann. Bevorzugt ist es hierbei jedoch, wenn es sich bei dem anderen Elastomer nicht um ein halogenhaltiges Elastomer handelt.

In einer Ausführungsform kann es sich bei dem zu 100% des Elastomers fehlenden Anteil, oder zumindest bei einem Teil davon, um NBR oder HNBR handeln. Bei einer noch weiteren Alternative kann eine Mischung von EPM und EPDM als Hauptkomponente des Elastomers der Zähne des Zahnriemens herangezogen werden, d.h. mindestens 70 Gew.-% des Elastomers in den Zähnen wird durch EPM und EPDM bereitgestellt, wobei es bevorzugt sein kann, wenn die Zähne des Zahnriemens ausschließlich aus einem Gemisch aus EPM und EPDM als Elastomer gebildet sind.

Das EPDM, das in den Zähnen des erfindungsgemäßen Zahnriemens verwendet wird, unterliegt keinen relevanten Beschränkungen, und es kann jedes geeignete konjugierte Dien zu dessen Herstellung verwendet werden, einschließlich beispielsweise 1,4-Hexadien, Dicyclopentadien oder Ethylidenenorbornen (ENB). Das in der vorliegenden Erfindung bevorzugte EPM oder EPDM-Elastomer enthält 35 Gew.-% bis 80 Gew.-% Ethyleneinheiten, 65 Gew.-% bis 25 Gew.-% Propyleneinheiten und 0 bis 10 Gew.-% der ungesättigten Dien-Komponente. In einer bevorzugteren Ausführungsform enthält das EPM oder EPDM-Elastomer 55 bis 78 Gew.-% Ethyleneinheiten, und in einer am meisten bevorzugten Ausführungsform enthält das EPM oder EPDM-Elastomer 65 bis 75 Gew.-% Ethyleneinheiten. Bei diesen bevorzugteren Ethylengehalten weisen Endlosbänder, die als Körperabschnitte des Zahnriemens die EPM oder EPDM-ElastomerZusammensetzungen enthalten, eine verbesserte Pilling-Beständigkeit auf. Meist bevorzugt ist es, wenn das Elastomer des gesamten Körpers des erfindungsgemäßen Zahnriemens EPDM ist.

Der Zähne des Zahnriemens, sowie gegebenenfalls der gesamte Körper mit Ausnahme von darin integrierten Verstärkungselementen wie verstärkenden Bändern, sind bevorzugt aus einer Elastomermischung gebildet, die neben dem Elastomer einen verstärkenden Füllstoff, insbesondere in einer Menge von 25 bis 250 Teilen und bevorzugt 25 bis 100 Teilen pro 100 Teile Elastomer und optional 1 bis 30 Teile eines Metallsalzes einer ▪ , ▪ - ungesättigten organischen Säure, pro 100 Teile Elastomer, enthält.

Als geeignete Füllstoffe können z.B. Ruß, Calciumcarbonat, Talk, Ton, hydratisierte Kieselsäure oder Gemische dieser Materialien angegeben werden. Durch die Füllstoffe wird dem Elastomermaterial einerseits eine günstige Wärmestabilität vermittelt, andererseits wird aber auch eine gute Reißfestigkeit und dynamische Eigenschaften realisiert.

Weiterhin können als Füllstoffe und/oder zur Verstärkung Textilfasern mit einer Länge von bis zu 7 mm in der Elastomermischung enthalten sein, die aus Aramid, Kohlenstoff, Glas, Polyester, Polyamid, Kunstseide, Polyvinylalkohol oder anderen Materialien gebildet sein können.

Zusätzlich zu diesen Inhaltsstoffen kann die Elastomermischung weitere Inhaltsstoffe enthalten, die üblicherweise in Elastomerzusammensetzungen verwendet werden. Solche Inhaltsstoffe beinhalten beispielsweise Prozess- und Extenderöle, Antioxidantien, Wachse, Pigmente, Weichmacher, Weichmacher und dergleichen. Diese Additive können in Mengen eingesetzt werden, die herkömmlicherweise in Standardelastomermischungen verwendet werden.

Das EPM und/oder EPDM im die Zähne des Elastomerzahnriemens ausbildenden Elastomer ist vernetzt, wobei die Vernetzung durch alle im Fachgebiet üblichen Vernetzungsmittel induziert werden kann. Besonders geeignet als Vernetzungsmittel sind dabei Schwefelvernetzer und Peroxidbasierte Vernetzer. Entsprechend ist das vernetzte Elastomer in der Elastomermischung, aus der die Zähne gebildet sind, bevorzugt ein Schwefelvernetztes oder peroxidisch vernetztes Elastomer. Ganz besonders bevorzugt ist dieses Elastomer ein peroxidisch vernetztes Elastomer.

Bevorzugte peroxidische Vernetzungsmittel für das EPM und/oder EPDM Elastomer sind im Kontext der hier beschriebenen Erfindung organische Peroxide, einschließlich, aber nicht beschränkt auf Dicumylperoxid, Bis-(t-butylperoxydiisopropylbenzol, t-Butylperbenzoat, Di-t-butylperoxid, und 2,5-Dimethyl-2,5-di-t-butylperoxyhexan, α,α-Bis(t-butylperoxy)diisopropylbenzol. Ein ganz besonders bevorzugtes organisches Peroxid ist α,α-Bis(t-butylperoxy)diisopropylbenzol.

Härtungswirksame Mengen an organischem Peroxid für die Zwecke der vorliegenden Erfindung betragen typischerweise 2 bis 10 Teile (pro 100 Teile Elastomer). Bevorzugte Gehalte an organischem Peroxid liegen zwischen 4 und 6 pro 100 Teile Elastomer. Optional kann dem organischen Peroxid-Vernetzungsmittel als Teil eines gemischten Härtungssystems Schwefel in einer Menge von 0,01 bis 1,0 Teile (pro 100 Teile Elastomer) zugesetzt werden, um den Elastizitätsmodul des gehärteten Elastomers zu verbessern, ohne dessen Reißfestigkeit negativ zu beeinflussen.

Der zweite wesentliche Bestandteil des erfindungsgemäßen Zahnriemens ist eine Zwischenschicht, die als wesentlichsten Polymerbestandteil (d.h. 70 Gew.-% oder mehr) HNBR enthält. Bei dieser Schicht handelt es sich nicht um eine aus Resorcin-Formaldehyd und HNBR gebildete Schicht, da solche Schichten aufgrund des hohen polaren Anteils an Resorcin-Formaldehyd keine ausreichend günstige Haftung zu aus EPM/EPDM als Elastomer gebildeten Zähnen des Zahnriemens vermitteln können. Bevorzugt ist es entsprechend, wenn die Zwischenschicht keine darin einbezogenen Anteile an Resorcin-Formaldehyd-Harz enthält. Mit "HNBR", beziehungsweise "hydrierten Acrylnitril-Butadienkautschuk" werden im Kontext dieser Anmeldung hydrierte Kautschukmaterialien aus Acrylnitril und Butadien, aber auch entsprechende Terpolymere verstanden, die zusätzlich bis zu 20 Gew.-% Acrylsäure- und/oder Methacrylsäureester enthalten

Neben dem HNBR können andererseits diejenigen Elastomere (mit einem Gesamtanteil von maximal 30 Gew.-%, bezogen auf die Gesamtpolymermenge) in der Zwischenschicht enthalten sein, die vorstehend als mögliche Ergänzung zur EPM und/oder EPDM für das Zahnmaterial des erfindungsgemäßen Zahnriemens genannt wurden. Bevorzugt ist aber ein möglichst hoher Anteil an HNBR, wobei mindestens 80 Gew.-% als bevorzugt und mindestens 90 Gew.-%, jeweils bezogen auf den Polymeranteil der Zwischenschicht, als besonders bevorzugt angegeben werden können.

Als HNBR zur Verwendung als Zwischenschichtmaterial in den erfindungsgemäßen Zahnriemen haben sich hydrierte Acrylnitril-Butadienkautschuke mit einem Hydrierungsgrad im Bereich von 70 bis 99%, bevorzugt 95% bis 98% als besonders günstig erwiesen. Alternativ oder zusätzlich dazu sind hydrierte Acrylnitril-Butadienkautschuke mit einem Acrylnitrilgehalt von 18 bis 47 Masse % und insbesondere 30 bis 37 Masse % besonders geeignet.

Die Zwischenschicht ist im erfindungsgemäßen Elastomerzahnriemen zweckmäßig vernetzt, wobei als Vernetzungsmittel insbesondere Schwefel oder peroxidische Vernetzer, insbesondere organische peroxidische Vernetzer, wie sie vorstehend für die Vernetzung der EPM und/oder EPDM Elastomere angegeben wurden, verwendet werden können. Für Schwefelvernetztes HNBR in der Zwischenschicht wurden besser Haftwerte beobachtet, während peroxidisch vernetztes HNBR bessere Dauerwärmebeständigkeiten zeigte.

Die Dicke der Zwischenschicht sollte einerseits groß genug sein, damit eine ausreichende Haftung zwischen Gewebe und Zähnen des Zahnriemens vermittelt werden kann, andererseits wurde ab einer bestimmten Dicke keine zusätzliche Verbesserung der Haftung oder anderer Eigenschaften mehr beobachtet, so dass eine weitere Dickensteigerung aufgrund der Kosten von HNBR eher nachteilig ist. Vor diesem Hintergrund kann eine Dicke der Zwischenschicht von mindestens etwa 10 µm als bevorzugt, eine Dicke im Bereich von etwa 10 bis 500 µm als besonders bevorzugt und eine Dicke im Bereich von etwa 50 bis 200 µm als ganz besonders bevorzugt angegeben werden. Zwischenschichten einer Dicke in den besonders bevorzugten Bereichen lassen sich durch Kalandrieren auf das Gewebe aufbringen, so dass für diese Beschichtung keine Lösungsmittelverarbeitung notwendig ist.

Bevorzugt weist die HNBR-Zwischenschicht eine Shore A Härte, wie bestimmt gemäß DIN ISO 7619-1, von weniger als 90 auf. Besonders bevorzugt ist es hierbei, wenn die Härte der HNBR-Zwischenschicht in einem ähnlichen Bereich liegt wie die Shore A Härte der die Zähne bildende Elastomermischung, d.h. vorzugsweise im Bereich von ±10 und insbesondere ±5 der Shore A Härte der die Zähne bildende Elastomermischung.

Zur Vermittlung von elektrischer Leitfähigkeit und um statische Ladungen ableiten zu können kann die Zwischenschicht zusätzlich zu dem HNBR Elastomer ein elektrisch leitfähiges Additiv enthalten, wobei hier Ruß als besonders geeignetes elektrisch leitfähiges Additiv angegeben werden kann. Falls Ruß in die Zwischenschicht einbezogen wird, liegt dessen Anteil vorzugsweise im Bereich von 20 bis 70 Teilen und besonders bevorzugt 30 bis 60 Teilen, bezogen auf 100 Teile Polymer in der Zwischenschicht. Alternativ oder zusätzlich dazu enthält die Zwischenschicht ein elektrisch leitfähiges Additiv, insbesondere in Form von Ruß, in einer Menge, die dem Zahnriemen eine elektrische Widerstandsfähigkeit, bestimmt gemäß ISO 9563:2015 von weniger als 50 MΩ und bevorzugt weniger als 5 MΩ vermittelt.

Zur Verbesserung der Festigkeit und/oder der Vernetzungsausbeute kann die Zwischenschicht des weiteren Metallsalze von organischen Säuren mit polymerisierbaren Gruppen wie insbesondere Zinkdimethacrylat oder Zinkdiacrylat oder Carbonsäuren mit mehreren konjugierten Doppelbindungen, insbesondere in Form von Sorbinsäure enthalten.

In Bezug auf die Zwischenschicht sowie den Körper des Elastomerzahnriemens ist darauf hinzuweisen, dass im Rahmen einer Vernetzung der Vernetzer und die Elastomere chemisch umgesetzt und gegebenenfalls reaktive Bestandteile wie Sorbinsäure oder die genannten Metallsalze in diese Reaktionen einbezogen werden.

Das in den erfindungsgemäßen Elastomerzahnriemen enthaltene Gewebe kann eine beliebige gewünschte Konfiguration aufweisen, wie beispielsweise ein herkömmliches Gewebe, das aus Kett- und Schussfäden in einem beliebigen Winkel besteht, oder es kann aus Kettfäden bestehen, oder aus einer gestrickten oder geflochtenen oder kettgewirkten Konfiguration und dergleichen. Es kann mehr als eine Stofflage verwendet werden. Falls gewünscht, kann der Stoff schräg geschnitten werden, so dass die Stränge einen Winkel mit der Bewegungsrichtung des Riemens bilden. Herkömmliche Stoffe können unter Verwendung von Materialien wie Baumwolle, Polyester, Polyamid, Hanf, Jute, Glasfaser und verschiedenen anderen natürlichen und synthetischen Fasern verwendet werden. In einer bevorzugten Ausführungsform der Erfindung besteht die Gewebeschicht aus einem dehnbaren verschleißfesten Gewebe, bei dem mindestens eines der Kett- oder Schussfäden aus Polyamid besteht. Besonders bevorzugt sind Gewebe aus mindestens 70% Polyamid, insbesondere aus einem linearen aliphatischen Polyamid. In der am meisten bevorzugten Form besteht das Gewebe aus Nylon 66.

Zur Vermittlung einer verbesserten Haftung auf der Zwischenschicht kann das Gewebe eine Beschichtung mit einem Resorcin-Formaldehyd-Latex (RFL) aufweisen. Als RFL-Zusammensetzung kann jedes geeignete Material verwendet werden, wobei zweckmäßig der Anteil des Resorcin-Formaldehyd-Harzes in der RFL-Zusammensetzung im Bereich von 2 bis 40 Gew.-% und der Anteil des Latex im Bereich von 60 bis 98 Gew.-%, jeweils bezogen auf den Feststoffanteil der Zusammensetzung, enthält. Als bevorzugt können Anteile im Bereich von 5 bis 30 Gew.-% für das Resorcin-Formaldehyd-Harz und 70 bis 95 Gew.-% für den Latex angegeben werden.

Hinsichtlich des Latex, der in die RFL-Zusammensetzung einbezogen wird, bestehen keine besonderen Erfordernisse, so dass im Prinzip jeder konventionell in RFL-Zusammensetzungen verwendete Latex genutzt werden kann. Beispiele solcher Latexmaterialien beinhalten unter anderem HNBR, NBR, Carboxyl-HNBR, Carboxyl-NBR, Vinylpyridin/Styrol-Butadien-Kautschuk ("VP/SBR"), Carboxyl-VP/SBR, SBR, chlorsulfoniertes Polyethylen ("CSM"), Ethylen-Alpha-Olefin-Elastomere wie Ethylen-Propylen-Dien-Terpolymer ("EPDM") und Ethylen-Propylen-Copolymer ("EPM"), wobei auch Gemische von zwei oder mehr dieser Materialien verwendet werden können. Hinsichtlich der Entsorgungseigenschaften ist es bevorzugt, wenn der Latex halogenfrei ist. Ein im Kontext der Erfindung für die RFL-Zusammensetzung bevorzugter Latex ist ein Vinylpyridin-haltiger Latex wie Vinylpyridin/Styrol-Butadien-Kautschuk ("VP/SBR") oder Carboxyl-VP/SBR. Der Vinylpyridingehalt dieses Latex beträgt vorzugsweise mehr als 50 Gew.-%.

Für die Auftragsmenge der RFL-Zusammensetzung kann ein Bereich von 10 bis 50 Gew.-% (bezogen auf das Gesamtgewicht des RFL-beschichteten Gewebes) als zweckmäßig angegeben werden.

Zur weiteren Verbesserung der strukturellen Integrität des Zahnriemens kann dieser zusätzlich mehrere Zugstränge, die in den Zahnriemenkörper eingebettet sind, enthalten. Diese Zugstränge, insbesondere in Form von Corden, können aus Polyamid (PA), Aramid, Polyester, Glas (z.B. E- oder K-Glas), Kohle, Polyetheretherketon (PEEK) oder Polyethylen-2,6-naphthalat (PEN) bestehen.

Während für die beschriebenen Elastomerzahnriemen eine Zwischenschicht auf Basis von HNBR zwischen dem Gewebe und den Zähnen des Zahnreimens erfindungswesentlich ist, kann der Zahnriemen auch auf der den Zähnen entgegengesetzten Seite eine Gewebeauflage aufweisen, die ihrerseits eine PFL-Beschichtung aufweisen und/oder über eine Zwischenschicht auf Basis von HBNR oder einem anderen Material mit dem Zahnriemenkörper verbunden sein kann.

In einem weiteren Aspekt betrifft die vorliegende Erfindung ein Verfahren Herstellung eines Elastomerzahnriemens, das die folgenden Schritte umfasst:
(i) Bereitstellen eines Gewebes;
(ii) Aufbringen einer Beschichtung auf das Gewebe, wobei die Beschichtungsmasse, mindestens 70 Gew.-% hydrierten Acrylnitril-Butadienkautschuk (HNBR), bezogen auf den Polymeranteil in der Beschichtungsmasse enthält,
(iii) Befestigen des Gewebes auf einem Elastomerzahnriemenkörper, dessen Zähne aus einer Elastomermischung gebildet sind, die mindestens 70% Gew.-%, bezogen auf den Polymeranteil der die Zähne bildenden Elastomermischung, eines vernetzten Ethylen-Propylen-Kautschuks (EPM) und/oder eines vernetzten Ethylen-Propylen-Terpolymerkautschuks (EPDM) enthält, in der Weise, dass die Beschichtung aus (ii) zwischen den Zähnen und dem Gewebe angeordnet ist.

Bevorzugt wird über das Verfahren ein wie im vorstehenden angegebener Elastomerzahnriemen hergestellt.

Das Aufbringen der Beschichtung im Schritt (ii) kann zweckmäßig erfolgen, indem eine Lösung des HNBR auf das Gewebe aufgebracht, und das Lösungsmittel anschließend verdampft wird. Dabei kann als Lösungsmittel ein beliebiges zur Lösung von HNBR geeignetes Lösungsmittel verwendet werden, beispielsweise Xylol, Toluol oder Carbonsäureester. Das Aufbringen der Zwischenschicht aus einer Lösung hat den Vorteil, dass verhältnismäßig dünnen Schichten aufgebracht werden können, und so der Materialeinsatz von HNBR minimiert wird.

Andererseits ist das Abringen der Zwischenschicht aus einer Lösung mit dem Nachteil verbunden, dass das Lösungsmittel während der weiteren Verarbeitung entfernt werden muss, was aufgrund der damit einhergehenden Umweltbelastung unerwünscht sein kann. Es ist daher auch möglich und bevorzugt, dass eine vorgefertigte Zwischenschicht auf das Gewebe aufkalandriert wird. Die dabei in der Regel verwendete höhere Dicke der HNBR-Schicht ist mit dem zusätzlichen Vorteil verbunden, dass im Stegbereich des Zahnriemens eine bessere Beständigkeit erreicht wird, weil der Abstand zwischen im Zahnriemen vorliegenden Zugsträngen und dem Gewebe erhöht wird.

Vorstehend wurde bereits erwähnt, dass sich eine weitere Verbesserung der Haftung zwischen Gewebe und Zwischenschicht durch Aufbringen einer RFL Schicht auf das Gewebe realisieren lässt. Entsprechend ist im Kontext ein Verfahren bevorzugt, das zusätzlich vor dem Schritt (i) einen Schritt des Aufbringens einer Haftschicht aus Resorcin/Formaldehyd/Latex umfasst. Dies Aufbringen kann zum Beispiel durch eine Tauch-Behandlung realisiert werden, bei der das Gewebe solange in eine Lösung der RFL-Zusammensetzung getaucht, herausgezogen und anschließend getrocknet wird, bis die gewünschte Menge an RFL-Auftrag erhalten wurde.

Bevorzugt umfasst das Befestigen in Schritt (iii) des Verfahrens einen Schritt des Vernetzens von Elastomer in Zähnen und ggf. Zahnriemenkörper und in der Zwischenschicht.

Der vorliegenden Erfindung liegt die überraschende Erkenntnis zu Grunde, dass sich eine gute Anbindung eines Zahnriemenkörpers auf Basis von EPM und/oder EPDM an ein verstärkendes Gewebe durch die Einbindung einer Zwischenschicht aus HNBR realisieren lässt. Gegenüber Elastomerzahnriemen auf Basis von HNBR lassen sich dabei verbesserte Tieftemperaturstabilitäten erzielen. Entsprechend betrifft ein weiterer Aspekt der vorliegenden Erfindung die Verwendung einer Schicht aus hydriertem Acrylnitril-Butadienkautschuk (HNBR), die zwischen aus EPM und/oder EPDM gebildeten Zähnen eines Zahnriemens und einem Gewebe, dass die Zähne überspannt, angeordnet ist, zur Erhöhung der Lebensdauer des Zahnriemens und/oder zur Verbesserung der Haftung zwischen den Zähnen und Gewebe in einem Zahnriemen und/oder Verbesserung der Tieftemperaturstabilität des Zahnriemens.

Im Folgenden wird die Erfindung anhand einiger Ausführungsbeispiele näher illustriert, die jedoch nicht in irgendeiner Weise als beschränkend für den Schutzumfang der Anmeldung angesehen werden sollte.

Die Erfindung wird weiter unter Bezugnahme auf die schematischen Zeichnungen erläutert:

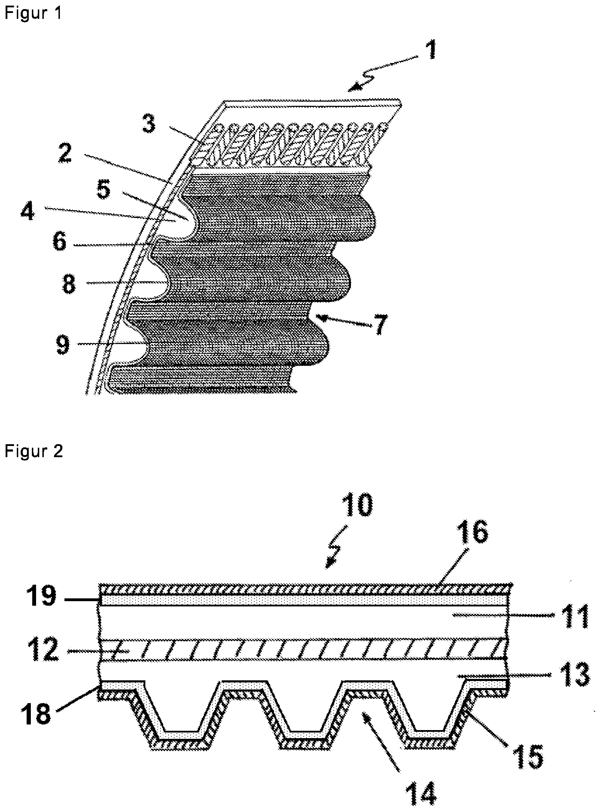

Figur 1 zeigt eine dreidimensionale Darstellung eines Zahnriemens, die mit einer Beschichtung ausgestattet ist;
Figur zeigt 2 einen Längsschnitt durch einen Zahnriemen mit einer Beschichtung.

Fig. 1 zeigt einen Zahnriemen mit einer Außenlage 2 als Riemenrücken, einem eingebetteten Festigkeitsträger3 sowie mit einem Unterbau 4. Der Festigkeitsträger besteht aus mehreren Zugsträngen, die nebeneinander angeordnet eine Festigkeitsträgerlage bilden, die in Figur 1 als einlagigen Ausführung dargestellt ist. Der Zugstrang, insbesondere in Form von Corden, kann aus Polyamid (PA), Aramid, Polyester, Glas (z. B. E- oder K-Glas), Kohle, Polyetheretherketon (PEEK) oder Polyethylen-2,6-naphthalat (PEN) oder aus Kombinationen der genannten Materialien bestehen.

Die Außenlage (2) und der Unterbau (4) bilden als Gesamteinheit den elastischen Grundkörper, der im Kontext der Erfindung z.B. aus einem Vulkanisat auf Basis von EPM, EPDM oder einem EPM/EPDM-Gemisch besteht.

Der Unterbau 4 ist mit einer zahnförmigen Profilierung, umfassend Zähne 5 und Zahnstege 6, versehen und bildet die Kraftübertragungszone 7, die besonders verschleißanfällig ist. Aus diesem Grunde ist die Kraftübertragungszone mit einer abriebfesten Beschichtung 8 in Form einer Textilauflage ausgestattet. Die Textilauflage besteht aus einem Gewebe, Gewirke oder Gestrick, das vorzugsweise aus Polyamid (PA) und/oder Polyester und/oder Baumwolle und/oder Aramid und/oder Polyetheretherketon (PEEK) besteht. Zwischen der Textilauflage und dem Elastomer, dass die Zähne und Zahnstege des Zahnriemens bildet, ist eine Schicht aus HNBR angeordnet. Erfindungsgemäß ist zwischen der Textilauflage und dem die Zähne und Zahnstege bildenden Elastomer eine Zwischenschicht aus HNBR angeordnet (nicht gezeigt).

Der Zahnriemen nach Fig. 2 umfasst eine Außenlage 11 als Riemenrücken, einen eingebetteten Festigkeitsträger 12 in Form von Zugsträngen und einen Unterbau 13 mit einer zahnförmigen Kraftübertragungszone 14. Bei diesem Ausführungsbeispiel ist sowohl die Decklage 11 als auch die Kraftübertragungszone mit einer Beschichtung 15 bzw. 16 ausgestattet. Die beiden Beschichtungen umfassen jeweils eine Textilauflage, insbesondere in Form eines Gewebes, die zur Anbindung des Gewebes an das EPDM des Unterbaus mit einer Elastomermischung 18 bzw.19 beschichtet sind.

Im Folgenden wird die vorliegende Erfindung anhand einiger Beispiele illustriert, die nicht in irgendeiner Weise als beschränkend für den Schutzumfang der Anmeldung angesehen werden sollten.

### Beispiel:

Es wurden verschiedene Zahnriemen der Geometrie STD 1280 8M-15 mit folgenden Aufbau hergestellt:

**Tabelle 1:**

| | Vergleich 1 | Vergleich 2 | Erfindung 1 | Vergleich 3 |
|---|---|---|---|---|
| Mischung | Chloropren 40phr FEF Ruß ZnO-vernetzt | EPDM 40phr FEF Ruß Peroxidvernetzt | EPDM 40phr FEF Ruß Peroxidvernetzt | EPDM 40phr FEF Ruß Peroxidvernetzt |

| Verstärkung | Glaskord | Glaskord | Glaskord | Glaskord |
|---|---|---|---|---|
| Gewebebeschichtung | Chloropren* 35phr FEF Ruß ZnO-vernetzt | Chloropren* 35phr FEF Ruß ZnO-vernetzt | HNBR 32phr SRF Ruß Schwefelvernetzt | - |
| RFL-Beschichtung | Vinylpyridinlatex-Basis: RFL-Gehalt 14% | Vinylpyridinlatex-Basis: RFL-Gehalt 14% | Vinylpyridinlatex-Basis: RFL-Gehalt 14% | Vinylpyridinlatex-Basis: RFL-Gehalt 14% |
| Gewebetyp | Polyamid | Polyamid | Polyamid | Polyamid |

| | | | | |
|---|---|---|---|---|
| * Chloroprenkautschuk; phr = Teile auf 100 Teile Kautschuk (*parts per hundred rubber*). | | | | |

Die so hergestellten Zahnriemen wurden üblichen Prüftests unterzogen. Die hierbei ermittelten Eigenschaftswerte sind in der folgenden Tabelle 2 angegeben:

**Tabelle 2**

| | Vergleich 1 | Vergleich 2 | Erfindung 1 | Vergleich 3 |
|---|---|---|---|---|
| **Riemenprüfungen** | | | | |
| Reißkraft an 2 Trummen [kN/mm/2 Trumme] | 1,3 | 1,23 | 1,28 | 1,24 |
| Reißdehnung [%] | 3,2 | 2,8 | 3,01 | 3,01 |
| Steifigkeit EA Sekante eines Trumms bis 1% [kN/mm/1 Trumm] | 18 | 20,5 | 20,2 | 18,2 |
| Shore-Härte am Riemen [shore A] | 84 | 84 | 82 | 83 |
| Gewebetrennfestigkeit [N/mm] | 13,9 | 3,2 | 4,5 | 5,5 |
| Steghaftung [N/mm] | 2,35 | 1,32 | 1,99 | 0,59 |
| Zahnabscherfestigkeit [N/mm] | 111 | 95 | 100 | 88 |

| **Materialprüfungen** | | | | |
|---|---|---|---|---|
| Widerstandsfähigkeit ISO 9563 [MΩ] | 0,03 | 3400 | 1,12 | 402,83 |
| Überspringmoment [Nm/Zahn] | 6,3 | 6,8 | 6,80 | 6,86 |
| Zugstranghaftung einzelner Cord [N] | 1304 | 1266 | 1248 | 110 |

| **Prüfstandsuntersuchungen** | | | | |
|---|---|---|---|---|
| 8M Lebensdauer 5 STD Scheiben [h] | 292 | 87 | 352 | 276 |
| Kältebeständigkeit | - | + | ++ | ++ |
| Chlorfreiheit | - | - | + | + |

Aus Tabelle 2 ist ersichtlich, dass der Zahnriemen "Erfindung 1" im Vergleich zu den Vergleichszahnriemen 1 bis 3 die beste Haltbarkeit (352 h) aufwies, gegenüber dem die Zahnriemen aus Chloroprenkautschuk (Vergleich 1) und EPDM ohne Zwischenschicht (Vergleich 3) deutlich abfallen. Der Zahnriemen aus EPDM mit einer Chloroprenkautschuk-Zwischenschicht (Vergleich 2) weist mit nur 87 h eine unzureichende Lebensdauer auf.

Die Zahnriemen gemäß Erfindung 1 und Vergleich 3 enthielten kein Chlor. Die Zahnriemen gemäß Vergleich 1 und Erfindung 1 wiesen einen vergleichsweise geringen Widerstand auf, aufgrund dessen elektrische Ladungen über den Riemen abgeleitet werden können. Entsprechend ist ersichtlich, dass sich der Zahnreimen "Erfindung 1" durch das beste Eigenschaftsprofil auszeichnet.

Gegenüber einen ausschließlich aus HNBR als Elastomermaterial hergestellten Zahnriemen (nicht gezeigt) weist der Zahnriemen "Erfindung 1" zudem eine deutlich verbesserte Tieftemperaturstabilität auf.

## Patentansprüche

1. Elastomerzahnriemen mit einem Körper, der ein Länge, in seitlichem Abstand angeordnete Seiten und eine Innen und eine Außenseite besitzt und eine Vielzahl von in einer Längsrichtung im Abstand auf der Innenseite oder der Außenseite des Körpers angeordnete Zähne festlegt, und einem Gewebe, das die Zähne überspannt, wobei Elastomermischung, aus der die Zähne gebildet sind, einen vernetzten Ethylen-Propylen-Kautschuk (EPM) und/oder einen vernetzten Ethylen-Propylen-Terpolymerkautschuk (EPDM) enthält, der mindestens 70 Gew.-%, bezogen auf den Polymeranteil der Elastomermischung, ausmacht, und wobei zwischen dem Gewebe und der die Zähne bildenden Elastomermischung eine Zwischenschicht angeordnet ist, **dadurch gekennzeichnet, dass** die Zwischenschicht bezogen auf den Polymeranteil der Zwischenschicht, mindestens 70 Gew.-% hydrierten Acrylnitril-Butadienkautschuk (HNBR) enthält.

2. Elastomerzahnriemen nach Anspruch 1, wobei die Zähne den vernetzten Ethylen-Propylen-Kautschuk (EPM) und/oder einen Ethylen-Propylen-Terpolymerkautschuk (EPDM) in einem Anteil von mindestens 80 Gew.-%, bevorzugt mindestens 90 Gew.-% und besonders bevorzugt mindestens 95 Gew.-%, bezogen auf den Polymeranteil der die Zähne bildenden Elastomermischung, enthalten.

3. Elastomerzahnriemen nach Anspruch 1 oder 2, wobei der Körper aus vernetztem Ethylen-Propylen-Kautschuk (EPM) und/oder Ethylen-Propylen-Terpolymerkautschuk (EPDM) als Elastomer gebildet ist.

4. Elastomerzahnriemen nach einem der vorangehenden Ansprüche, wobei das vernetztes Elastomer in der Elastomermischung, aus der die Zähne gebildet sind, ein Schwefel-vernetztes oder peroxidisch vernetztes Elastomer und bevorzugt ein peroxidisch vernetztes Elastomer ist.

5. Elastomerzahnriemen nach einem der vorangehenden Ansprüche, wobei die Zwischenschicht mindestens 80 Gew.-% und bevorzugt mindestens 90 Gew.-%, bezogen auf den Polymeranteil der Zwischenschicht, hydrierten Acrylnitril-Butadienkautschuk (HNBR) enthält.

6. Elastomerzahnriemen nach einem der vorangehenden Ansprüche, wobei der hydrierte Acrylnitril-Butadienkautschuk einen Hydrierungsgrad im Bereich im Bereich von 70 bis 99%, und bevorzugt 95% bis 98% und/oder einen Acrylnitrilgehalt von 18 bis 47 Masse-% und bevorzugt 30 bis 37 Masse- % aufweist.

7. Elastomerzahnriemen nach einem der vorangehenden Ansprüche, wobei die Zwischenschicht eine Dicke von mindestens etwa 10 µm, bevorzugt im Bereich von etwa 10 bis 500 µm und besonders bevorzugt im Bereich von etwa 50 bis 200 µm und/oder eine Shore A Härte von weniger als 90 aufweist.

8. Elastomerzahnriemen nach einem der vorangehenden Ansprüche, wobei die Zwischenschicht ein Additiv zur Vermittlung von elektrischer Leitfähigkeit, vorzugsweise in Form von Ruß enthält.

9. Elastomerzahnriemen nach Anspruch 8, wobei die Zwischenschicht einen Anteil von 20 bis 70 Teilen und bevorzugt 30 bis 60 Teilen des Additivs, bezogen auf 100 Teile Polymer in der Zwischenschicht, enthält und/oder wobei der Elastomerzahnriemen eine elektrische Widerstandsfähigkeit, bestimmt gemäß ISO 9563:2015 von weniger als 50 MΩ und bevorzugt weniger als 5 MΩ aufweist.

10. Elastomerzahnriemen nach einem der vorangehenden Ansprüche, wobei das Gewebe zu mehr als 70% aus Polyamid, und bevorzugt aus linearem aliphatischen Amid gebildet ist.

11. Elastomerzahnriemen nach einem der vorangehenden Ansprüche, wobei das Gewebe eine Beschichtung mit einem Resorcin/Formaldehyd/Latex aufweist, wobei der Latex des Resorcin/Formaldehyd/Latex vorzugsweise einen Vinylpyridingehalt von mehr als 50 Gew.-% aufweist.

12. Verfahren zur Herstellung eines Elastomerzahnriemens, wie in einem der Ansprüche 1 bis 11 angegeben, wobei das Verfahren die Schritte:
(i) Bereitstellen eines Gewebes;
(ii) Aufbringen einer Beschichtung auf das Gewebe, wobei die Beschichtungsmasse, mindestens 70 Gew.-% hydrierten Acrylnitril-Butadienkautschuk (HNBR), bezogen auf den Polymeranteil in der Beschichtungsmasse enthält,
(iii) Befestigen des Gewebes auf einem Elastomerzahnriemenkörper, dessen Zähne aus einer Elastomermischung gebildet sind, die mindestens 70% Gew.-%, bezogen auf den Polymeranteil der die Zähne bildenden Elastomermischung, eines vernetzten Ethylen-Propylen-Kautschuks (EPM) und/oder eines vernetzten Ethylen-Propylen-Terpolymerkautschuks (EPDM) enthält, gebildet sind in der Weise, dass die Beschichtung aus (ii) zwischen den Zähnen und dem Gewebe angeordnet ist.

13. Verfahren nach Anspruch 12, wobei die Beschichtung in Schritt (ii) durch Aufbringen einer Lösung des hydrierten Acrylnitril-Butadienkautschuks auf das Gewebe und anschließendes Verdampfen des Lösungsmittels oder durch Aufkalandrieren einer den hydrierten Acrylnitril-Butadienkautschuk enthaltenden Folie auf das Gewebe erfolgt.

14. Verfahren nach Anspruch 12 oder 13, wobei das Verfahren zusätzlich vor dem Schritt (i) einen Schritt des Aufbringens einer Haftschicht aus Resorcin/Formaldehyd/Latex auf das Gewebe aufweist.

15. Verwendung einer Schicht aus hydriertem Acrylnitril-Butadienkautschuk (HNBR), wobei die Schicht bezogen auf den Polymeranteil der Schicht, mindestens 70 Gew.-% hydrierten Acrylnitril-Butadienkautschuk (HNBR) enthält, die zwischen aus Ethylen-Propylen-Kautschuk (EPM) und/oder Ethylen-Propylen-Terpolymerkautschuks (EPDM) gebildeten Zähnen eines Zahnriemens und einem Gewebe, dass die Zähne überspannt, angeordnet ist, zur Erhöhung der Lebensdauer des Zahnriemens und/oder zur Verbesserung der Haftung zwischen den Zähnen und Gewebe in einem Zahnriemen und/oder Verbesserung der Tieftemperaturstabilität des Zahnriemens.

## Claims

1. Elastomer toothed belt which has a body which has a length, sides arranged at a lateral distance to one another and an inside and an outside and a multiplicity of teeth arranged spaced apart from one another in a longitudinal direction on the inside or the outside of the body and a fabric which spans the teeth, wherein the elastomer mixture from which the teeth are formed contains a crosslinked ethylene-propylene rubber (EPM) and/or a crosslinked ethylene-propylene terpolymer rubber (EPDM) which accounts for at least 70% by weight, of the elastomer mixture based on the polymer proportion and wherein an interlayer is arranged between the fabric and the elastomer mixture forming the teeth, **characterized in that** the interlayer contains at least 70% by weight of hydrogenated acrylonitrile-butadiene rubber (HNBR) based on the polymer proportion of the interlayer.

2. Elastomer toothed belt according to Claim 1, wherein the teeth contain the crosslinked ethylene-propylene rubber (EPM) and/or an ethylene-propylene terpolymer rubber (EPDM) in a proportion of at least 80% by weight, preferably at least 90% by weight and particularly preferably at least 95% by weight based on the polymer proportion of the elastomer mixture forming the teeth.

3. Elastomer toothed belt according to Claim 1 or 2, wherein the body is formed from crosslinked ethylene-propylene rubber (EPM) and/or ethylene-propylene-terpolymer rubber (EPDM) as the elastomer.

4. Elastomer toothed belt according to any of the preceding claims, wherein the crosslinked elastomer in the elastomer mixture from which the teeth are formed is a sulfur-crosslinked or peroxidically crosslinked elastomer and preferably a peroxidically crosslinked elastomer.

5. Elastomer toothed belt according to any of the preceding claims, wherein the interlayer contains at least 80% by weight and preferably at least 90% by weight of hydrogenated acrylonitrile-butadiene rubber (HNBR) based on the polymer proportion of the interlayer.

6. Elastomer toothed belt according to any of the preceding claims, wherein the hydrogenated acrylonitrile-butadiene rubber has a degree of hydrogenation in the range from 70% to 99% and preferably 95% to 98% and/or an acrylonitrile content of 18% to 47% by mass and preferably 30% to 37% by mass.

7. Elastomer toothed belt according to any of the preceding claims, wherein the interlayer has a thickness of at least about 10 µm, preferably in the range from about 10 to 500 µm and particularly preferably in the range from about 50 to 200 µm and/or a Shore A hardness of less than 90.

8. Elastomer toothed belt according to any of the preceding claims, wherein the interlayer contains an additive for imparting electrical conductivity, preferably in the form of carbon black.

9. Elastomer toothed belt according to Claim 8, wherein the interlayer contains a proportion of 20 to 70 parts and preferably 30 to 60 parts of the additive based on 100 parts of polymer in the interlayer and/or wherein the elastomer toothed belt has an electrical resistance determined according to ISO 9563:2015 of less than 50 MΩ and preferably less than 5 MΩ.

10. Elastomer toothed belt according to any of the preceding claims, wherein the fabric is formed to an extent of more than 70% from polyamide and preferably from linear aliphatic amide.

11. Elastomer toothed belt according to any of the preceding claims, wherein the fabric has a coating with a resorcinol/formaldehyde/latex, wherein the latex of the resorcinol/formaldehyde/latex preferably has a vinylpyridine content of more than 50% by weight.

12. Process for producing an elastomer toothed belt, as specified in any of claims 1 to 11, wherein the process comprises the steps of:
(i) providing a fabric;
(ii) applying a coating to the fabric, wherein the coating composition contains at least 70% by weight of hydrogenated acrylonitrile-butadiene rubber (HNBR) based on the polymer proportion in the coating composition,
(iii) securing the fabric to an elastomer toothed belt body whose teeth are formed from an elastomer mixture containing at least 70% by weight, based on the polymer proportion of the elastomer mixture forming the teeth, of a crosslinked ethylene-propylene rubber (EPM) and/or a crosslinked ethylene-propylene terpolymer rubber (EPDM) in such a way that the coating from step (ii) is arranged between the teeth and the fabric.

13. Process according to Claim 12, wherein the coating in step (ii) is carried out by applying a solution of the hydrogenated acrylonitrile-butadiene rubber to the fabric and subsequently evaporating the solvent or by calendering a film containing the hydrogenated acrylonitrile-butadiene rubber onto the fabric.

14. Process according to Claim 12 or 13, wherein the process additionally comprises a step of applying an adhesion-promoting layer of resorcinol/formaldehyde/latex to the fabric prior to step (i).

15. Use of a layer of hydrogenated acrylonitrile-butadiene rubber (HNBR), wherein the layer contains at least 70% by weight of hydrogenated acrylonitrile-butadiene rubber (HNBR) based on the polymer proportion of the layer, arranged between ethylene-propylene rubber (EPM) and/or ethylene-propylene-terpolymer rubber (EPDM) teeth of a toothed belt and a fabric spanning the teeth for increasing the service life of the toothed belt and/or for improving the adhesion between the teeth and the fabric in a toothed belt and/or improving the low-temperature stability of the toothed belt.

## Revendications

1. Courroie dentée élastomère présentant un corps, qui possède une longueur, des côtés agencés à une distance latérale et un côté intérieur et un côté extérieur et qui fixe une pluralité de dents agencées dans une direction longitudinale à une certaine distance sur le côté intérieur ou le côté extérieur de corps, et un tissu, qui recouvre les dents, le mélange élastomère, dont sont formées les dents, contenant un caoutchouc d'éthylène-propylène réticulé (EPM) et/ou un caoutchouc de terpolymère d'éthylène-propylène réticulé (EPDM), qui représente au moins 70% en poids, par rapport à la proportion de polymère du mélange élastomère, et une couche intermédiaire étant agencée entre le tissu et le mélange élastomère formant les dents, **caractérisée en ce que** la couche intermédiaire contient, par rapport à la proportion de polymère de la couche intermédiaire, au moins 70% en poids de caoutchouc d'acrylonitrile-butadiène hydrogéné (HNBR).

2. Courroie dentée élastomère selon la revendication 1, les dents contenant le caoutchouc d'éthylène-propylène réticulé (EPM) et/ou un caoutchouc de terpolymère d'éthylène-propylène (EPDM) en une proportion d'au moins 80% en poids, de préférence d'au moins 90% en poids et de manière particulièrement préférée d'au moins 95% en poids, par rapport à la proportion de polymère du mélange élastomère formant les dents.

3. Courroie dentée élastomère selon la revendication 1 ou 2, le corps étant formé à partir de caoutchouc d'éthylène-propylène réticulé (EPM) et/ou de caoutchouc de terpolymère d'éthylène-propylène réticulé (EPDM) en tant qu'élastomère.

4. Courroie dentée élastomère selon l'une des revendications précédentes, l'élastomère réticulé dans le mélange élastomère, dont sont formées les dents, étant un élastomère réticulé au soufre ou un élastomère réticulé par un peroxyde et de préférence un élastomère réticulé par un peroxyde.

5. Courroie dentée élastomère selon l'une des revendications précédentes, la couche intermédiaire contenant au moins 80% en poids et de préférence au moins 90% en poids, par rapport à la proportion de polymère de la couche intermédiaire, de caoutchouc d'acrylonitrile-butadiène hydrogéné (HNBR).

6. Courroie dentée élastomère selon l'une des revendications précédentes, le caoutchouc d'acrylonitrile-butadiène hydrogéné présentant un degré d'hydrogénation dans la plage de 70 à 99% et de préférence de 95% à 98% et/ou une teneur en acrylonitrile de 18 à 47% en masse et de préférence de 30 à 37% en masse.

7. Courroie dentée élastomère selon l'une des revendications précédentes, la couche intermédiaire présentant une épaisseur d'au moins environ 10 µm, de préférence dans la plage d'environ 10 à 500 µm et de manière particulièrement préférée dans la plage d'environ 50 à 200 µm et/ou une dureté Shore A de moins de 90.

8. Courroie dentée élastomère selon l'une des revendications précédentes, la couche intermédiaire contenant un additif destiné à conférer une conductibilité électrique, de préférence sous forme de suie.

9. Courroie dentée élastomère selon la revendication 8, la couche intermédiaire contenant une proportion de 20 à 70 parties et de préférence de 30 à 60 parties de l'additif, par rapport à 100 parties de polymère dans la couche intermédiaire et/ou la courroie dentée élastomère présentant une résistance électrique, déterminée selon la norme ISO 9563:2015, inférieure à 50 MΩ et de préférence inférieure à 5 MΩ.

10. Courroie dentée élastomère selon l'une des revendications précédentes, le tissu étant formé à raison de plus de 70% de polyamide et de préférence d'amide aliphatique linéaire.

11. Courroie dentée élastomère selon l'une des revendications précédentes, le tissu présentant un revêtement par un résorcinol/formaldéhyde/latex, le latex du résorcinol/formaldéhyde/latex présentant de préférence une teneur en vinylpyridine supérieure à 50% en poids.

12. Procédé de fabrication d'une courroie dentée élastomère selon l'une des revendications 1 à 11, le procédé présentant les étapes :
(i) mise à disposition d'un tissu ;
(ii) application d'un revêtement sur le tissu, la masse de revêtement contenant au moins 70% en poids de caoutchouc d'acrylonitrile-butadiène hydrogéné (HNBR), par rapport à la proportion de polymère dans la masse de revêtement,
(iii) fixation du tissu sur un corps de courroie dentée élastomère, dont les dents sont formées par un mélange élastomère qui contient au moins 70% en poids, par rapport à la proportion de polymère du mélange élastomère formant les dents, d'un caoutchouc d'éthylène-propylène réticulé (EPM) et/ou d'un caoutchouc de terpolymère d'éthylène-propylène réticulé (EPDM), de manière telle que le revêtement de (ii) est agencé entre les dents et le tissu.

13. Procédé selon la revendication 12, le revêtement dans l'étape (ii) étant effectué par application d'une solution du caoutchouc d'acrylonitrile-butadiène hydrogéné sur le tissu et évaporation consécutive du solvant ou par calandrage d'une feuille contenant le caoutchouc d'acrylonitrile-butadiène hydrogéné sur le tissu.

14. Procédé selon la revendication 12 ou 13, le procédé présentant en plus, avant l'étape (i), une étape d'application d'une couche d'adhérence en résorcinol/formaldéhyde/latex sur le tissu.

15. Utilisation d'une couche en caoutchouc d'acrylonitrile-butadiène hydrogéné (HNBR), la couche contenant, par rapport à la proportion de polymère dans la couche, au moins 70% en poids de caoutchouc d'acrylonitrile-butadiène hydrogéné (HNBR), qui est agencée entre des dents, formées de caoutchouc d'éthylène-propylène (EPM) et/ou de caoutchouc de terpolymère d'éthylène-propylène (EPDM), d'une courroie dentée et un tissu, qui recouvre les dents, en vue d'augmenter la durée de vie de la courroie dentée et/ou d'améliorer l'adhérence entre les dents et le tissu dans une courroie dentée et/ou d'améliorer la stabilité aux basses températures de la courroie dentée.
